Europäisches Patentamt

(19) European Patent Office    (11) Publication number: **0 097 465**

Office européen des brevets    **B1**

(12)    **EUROPEAN PATENT SPECIFICATION**

(45) Date of publication of patent specification: **06.05.87**    (51) Int. Cl.⁴: **H 05 G 1/64,** A 61 B 6/12,
                                                                    H 04 N 5/32
(21) Application number: **83303378.0**

(22) Date of filing: **10.06.83**

(54) **Diagnostic X-ray apparatus.**

(30) Priority: **17.06.82 JP 103027/82**

(43) Date of publication of application:
**04.01.84 Bulletin 84/01**

(45) Publication of the grant of the patent:
**06.05.87 Bulletin 87/19**

(84) Designated Contracting States:
**DE FR NL**

(56) References cited:
**DE-A-2 530 315**
**DE-B-2 547 120**
**US-A-4 181 914**
**US-A-4 204 225**
**US-A-4 204 226**

**TOSHIBA REVIEW, INTERNATIONAL EDITION,**
**no. 43, July-August 1969 M. NAKASHIKA, H.**
**WATANABE, T. OKUBO, K. NISHIO, Y.**
**WATASE "Latest Diagnostic System for**
**Circulatory Organs", Publisher: Tokyo Shibaura**
**Electric Co., Ltd.; pages 24-29**

(73) Proprietor: **Kabushiki Kaisha Toshiba**
**72, Horikawa-cho Saiwai-ku**
**Kawasaki-shi Kanagawa-ken 210 (JP)**

(72) Inventor: **Honda, Michitaka c/o Patent Division**
**Tokyo Shibaura Denki K. K. 72 Horikawa-cho**
**Saiwai-ku Kawasaki-shi Kanagawa-ken (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

# 0 097 465

**Description**

This invention relates to diagnostic x-ray apparatus which makes use of a digital x-ray subtraction imaging technique, and more particularly to such apparatus having a master timing control unit.

A digital x-ray subtraction imaging technique using an imaging intensifier-T.V. chain was developed and first described by Mistretta et al. In, for example, U.S. Patent Nos. 4,204,225 and 4,204,226, in the name of Charles A. Mistretta, a real-time digital x-ray subtraction imaging method and apparatus are disclosed. One of the digital x-ray subtraction imaging apparatuses includes an image intensifier, a T.V. camera the output of which is digitised and an image processor incorporating two digital memories. As disclosed in U.S. Patent No. 4,204,225, it is preferable when carrying out the mask mode of this process to employ a first memory to integrate and store digitised mask video signals from an image intensifier-T.V. chain during an initial mask time interval utilising a relatively large number of television fields. A second memory system integrates digital video signals and provides an output of these integrated video signals, from which the mask video signals from the first memory system are subtracted. The resulting digital difference video signals are supplied to a digital-to-analogue converter which provides corresponding analogue difference video signals for display by a display device. Alternatively, the resulting analogue difference video signals may be fed to a multiformat camera for making a selected number of radiographic exposures on a single film.

In the time interval difference mode disclosed in U.S. Patent No. 4,204,226, a series of difference images is produced by integrating digital video signals over a series of successive time intervals, performing a series of subtractions between the sets of successive integrated video signals stored in the memories to produce a series of digital difference video signals, and converting such digital difference video signals into visibly displayed difference images representing changes in the x-ray image during the successive time intervals.

One advantage of digital radiography apparatus is its capability to perform angiography by means of intravenous injection instead of intra-arterial catheter techniques with their higher risks.

Still another advantage of digital radiography apparatus is its capability to provide improved low contrast detectability, namely, to amplify subtle amounts of contrast media in arteries better than film methods can.

Another advantage of digital radiography apparatus employing pulsed x-rays is that significant loss of spatial resolution due to physiological motion can be prevented because the short radiation pulse for each image results in less loss of detail.

These digital radiography apparatuses include a master timing control circuit which provides synchronisation and is connected to a slave timing control unit for controlling an associated memory unit. The T.V. camera operates in synchronisation with the system, via the master timing control which generates sync and blanking signals for the camera video signals.

In the prior art systems, the master timing control unit generally comprises a single-phase control clock, so that synchronisation errors arise between the sync signals produced by the video camera and a pixel clock via the master timing control circuit, which controls the memory unit for writing in the digital pixel signals. These synchronisation errors cause mis-registration, and the artifacts from the mis-registration appear in the subtraction images. The artifacts from the mis-registration are especially harmful when the contrast between picture elements is rather low. It is desirable, therefore, to maintain improved spatial resolution and low contrast detectability by removing or minimising the synchronisation errors.

The invention seeks to overcome the defects of the previous digital radiography apparatus to provide subtraction images without the artifacts from mis-registration due to synchronisation errors, and to minimise significant mis-registration due to synchronisation errors.

The invention seeks to constrain synchronisation errors between the horizontal synchronising signals from the video camera and the synchronising signals from the master timing control unit to acceptably low levels.

According to the invention there is provided a diagnostic x-ray apparatus for producing visible difference images from x-ray images obtained from x-ray radiation comprising: an x-ray generating source for emitting x-ray radiation to produce an x-ray image; a television camera for converting the x-ray image into a series of television images comprising trains of analogue video signals; an analogue-to-digital converter for converting the analogue video signals into corresponding digital video signals; a digital memory system including at least two digital memory means for storing and integrating the digital video signals in a predetermined sequence; subtracting means for producing digital difference video signals by performing a subtraction between the recent digital video signals stored in the digital memory system and preceding digital video signals stored in the digital memory system; a digital-to-analogue converter for converting digital difference video signals into analogue difference video signals, synchronising means for producing synchronising signals for controlling the operation of the analogue-to-digital converter, the digital-to-analogue converter, the storing and integrating of the digital memory system, and the operation of said subtracting means; and a display or recording means for displaying or recording visible difference images corresponding to the analogue difference video signals, characterised in that the synchronising means includes means for generating a plurality of pulse trains in predetermined time relationship and means for selecting one of the pulse trains according to a predetermined formula in response to

2

synchronising pulse data in said video signals, said one pulse train being selected in a way to minimise synchronisation errors between the synchronising pulse data in the video signals and the synchronising signals from the synchronising means, and means responsive to said selected pulse train for producing the said synchronising signals.

A preferred embodiment of the invention will now be described, by way of example and with reference to the accompanying drawings, wherein:

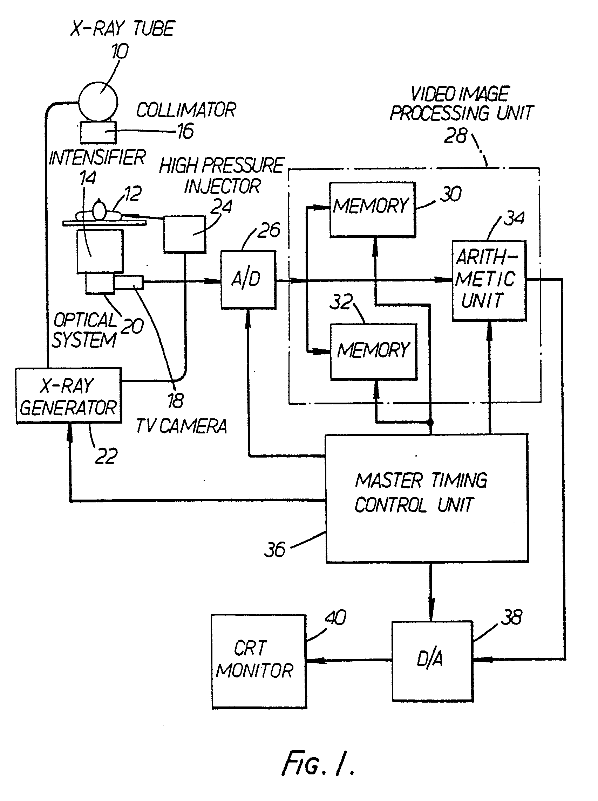

Figure 1 is a block diagram of the embodiment of a diagnostic x-ray apparatus;

Figure 2 is a detailed diagram of an example of the master timing control unit of the embodiment of Figure 1; and

Figure 3 is a timing diagram for the timing control unit of Figure 2.

As indicated earlier, diagnostic x-ray apparatus using real time digital processing of x-ray transmission often includes a conventional T.V. fluoroscopy system employing real time digital processing hardware.

Referring to the drawings, an x-ray tube 10 has a conventional filament and an anode which produces x-rays which impinge upon a patient 12, thus casting a shadow image of the patient on an input of an image intensifier tube 14. A servo-controlled collimator 16 which has a collimator servo system (not shown) is disposed between the x-ray tube 10 and the patient, and controls the size of the x-ray beam emitted from the x-ray tube 10.

The intensifier 14 intensifies the x-ray image and produces a corresponding optical image on the output screen of the intensifier 14. This image is scanned by a T.V. camera 18, via a known optical system 20 including an object lens, a field lens (not shown) and auto iris (not shown) for adjusting the quantity of light from the intensifier 14, under control of a T.V. camera control unit (not shown) to produce corresponding video signals on an output of the T.V. camera 18.

An x-ray generator 22 serves to provide a high voltage to energise the x-ray tube 10 under control of an x-ray control unit (not shown). The x-ray generator 22 is also connected to a master timing control unit which will be described in detail later, so that x-ray tube 10 is pulsed on and off at regular intervals according to the requirement of the various imaging models.

Subtraction is a known technique that is used to remove overlying and underlying structures after the object of interest is enhanced by a contrast medium. Images are acquired before and after the contrast medium is present and these images are subtracted.

The contrast medium is preferably injected into the right basilic vein of the patient 12 using a high-pressure injector 24 synchronised with the operation of the x-ray generator 22. An analogue-to-digital interface circuit 26 including a sync stripper separates the vertical and horizontal synchronising pulses from the video information provided from the camera 18 to provide video signals without the synchronising pulses. These video signals are applied to a gate circuit and to an analogue-to-digital converter for converting analogue video signals provided at the output of the gate circuit into corresponding digital video signals. The master timing control unit 36 supplies clock and gating or control, pulses to the analogue-to-digital interface circuit 26.

The digital video output of the analogue-to-digital interface circuit 26 is supplied to a video image processing unit 28. The video image processor 28 includes two memory systems 30, 32, for integrating and storing the digital video signals over a series of time intervals, and an arithmetic logic unit 34 for enabling the memories 30, 32 to integrate and store the digital video signals over the series of time intervals. The processor 28 also produces digital difference video signals by performing subtraction between the set of integrated digital video signals stored in the most recently filled memory system 32 and the set stored in the previously filled memory system 30 in response to timing signals initiated by the master timing control unit 36.

The digital difference video signals are supplied to a digital-to-analogue interface circuit 38 which provides corresponding analogue difference video signals for display by a CRT monitor 40.

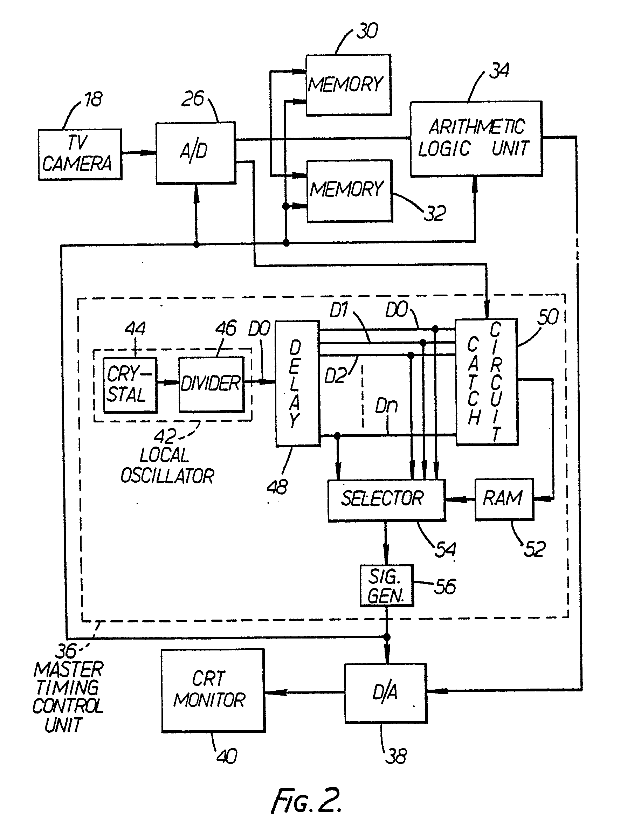

Figure 2 includes a detailed circuit diagram of the master control circuit 36 for providing all of the control, timing and synchronising pulses and signals for the entire system.

In Figure 2, the master timing control circuit 36 includes a local oscillator 42 for generating a basic clock at a frequency f1 which amounts to one clock pulse every T nanoseconds (ns), the clock comprising a crystal oscillator 44 and a divider 46 driven by the crystal oscillator.

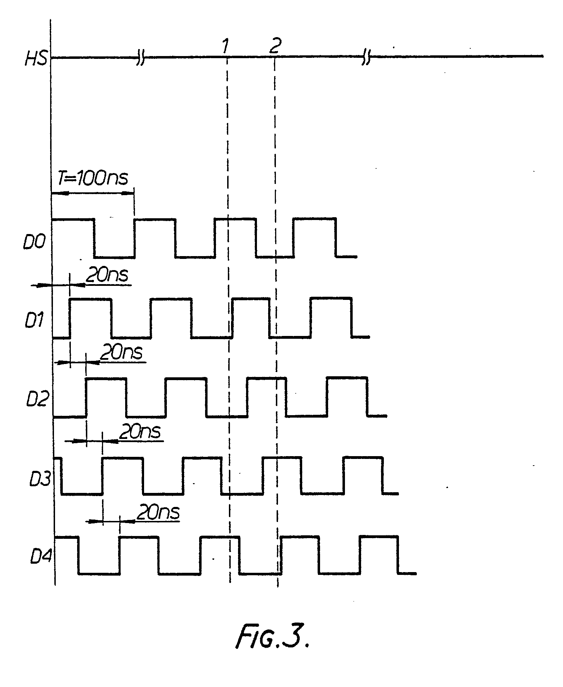

This basic clock at the frequency f1 is applied to a delay circuit 48 which provides a latch circuit 50 with a plurality of difference clock pulses D1—Dn delayed by an amount T/n (n=an integer more than two), with respect to the basic clock. For example, assuming T is 100 ns, n being 5, five different clock pulses delayed by 20 ns with respect to the basic clock are generated as shown in Figure 3.

The different clock pulses D1—Dn from the delay circuit 48 are sampled by the latch circuit 50 in synchronism with the horizontal synchronising signals from the analogue-to-digital interface 26, and the sampled values are converted to quantified signals which substantially indicate the number of active lines. The quantified output data from the latch circuit 50 will be received by a random access memory 52, for later access, by addressing the memory 52 in a predetermined sequence. A logic flag indicative of the status of the latch is furnished to the random access memory 52. A selector 54 receives the different clock pulses D1—Dn from the delay circuit 48, and selects one of the different clock pulses in response to the logical read out of the memory 52. The output selected by the selector 54 is supplied to a synchronising signal generator 56 which provides synchronising signals to the digital-to-analogue interface circuit 38. The

3

synchronising signal generator 56 is provided for generating horizontal and vertical sync signals. The digital difference video output from the arithmetic logic unit 34 is applied to the digital-to-analogue interface circuit 38 in conjunction with the horizontal and vertical synchronising pulses. The digital-to-analogue interface circuit 38 includes a digital-to-analogue converter for converting the composite video output from digital form into analogue video signals, which are then supplied to the CRT monitor 40 for display.

The operation of the apparatus according to the present invention can be most easily understood by considering Figure 2 in conjunction with Figure 3.

As previously described, in the so-called mask mode method, a series of difference images is produced by developing a pre-injection mask image, prior to the injection of the contrast medium, and electronically subtracting the mask image from each of a series of post-injection images. This mask subtraction mode results in the removal of effects due to soft tissue and bone or air-filled structures, so that the image elements due to the contrast medium are clearly visible in the subtracted images. An alternative method offered by the subtraction technique is the use of the time interval difference method, in which each set of integrated digital images is used as a mask for the following integrated digital image. The time interval difference method is particularly well adapted for visualising the progress of a contrast medium injected into a peripheral portion of the cardiovascular system.

In order to digitise and store the information which serves as the mask or the subsequent series of images, the amplified analogue video signals from the T.V. camera 18 are supplied to the A/D interface circuit 26 which gates the analogue video signals, separates the horizontal and vertical sync pulses from the gated analogue signals, and digitises the gated signals in the analogue-to-digital converter periodically, as determined by the synchronisating clock pulses from the synchronising clock pulse generator 56. The A/D interface circuit 26 applies corresponding digital video signals to the mask producing memory system 30 where a first image serving as the mask for the subtraction is made before the contrast medium injection, and also to the second memory system 32 storing the post-injection image.

Alternately, the mask image in the first memory system 30 is subtracted by the arithmetic logic unit 34 from the integrated subsequent video signals from the second memory system 32. The digital difference video signals of the subtracted result are supplied from the arithmetic logic unit 34 to the D/A interface circuit 38. The first memory system 30, the second memory system 32, and the arithmetic logic unit 34 are in synchronisation with the synchronising clock pulses generated by the synchronising clock pulse generator 56.

The synchronising clock generator 56 generates the synchronising clock pulses in response to the output of the selector 54 which selects one of the different delayed pulses D1—D4 in proper phase with the horizontal synchronising pulses separated by the stripper of the A/D interface circuit 26.

The selector 54 operates in response to the stored data representing the delayed pulses in accordance with a predetermined formula in conjunction with the latch status. The delayed pulses D1—D4 are successively transmitted in parallel to the latch 50 which generates the address sequence used for reading data from the random access memory 52 coincident with occurrence of the horizontal sync pulses.

Conversions of the RAM 52 are set forth in Table 1:

TABLE 1

| Delayed pulse selected | Latch status representation of the presence of delayed pulse in each line | | | | |
|---|---|---|---|---|---|
| | D0 | D1 | D2 | D3 | D4 |
| D0 | 1 | 0 | 0 | 1 | 1 |
| D1 | 1 | 0 | 0 | 0 | 1 |
| D1 | 1 | 1 | 0 | 0 | 1 |
| D2 · | 1 | 1 | 0 | 0 | 0 |
| D2 | 1 | 1 | 1 | 0 | 0 |
| D3 | 0 | 1 | 1 | 0 | 0 |
| D3 | 0 | 1 | 1 | 1 | 0 |
| D4 | 0 | 0 | 1 | 1 | 0 |
| D4 | 0 | 0 | 1 | 1 | 1 |
| D0 | 0 | 0 | 0 | 1 | 1 |

The synchronising clock pulses used for keeping the entire system in a proper phase relationship employ the basic pulse D0 before occurrence of the horizontal sync pulse separated in the A/D interface circuit 26.

Horizontal sync pulses separated in the A/D interface circuit 26 are supplied repeatedly as, for instance, every 63.5 micro-seconds, shown by the waveform which is labelled HS in Figure 3.

In Figure 3, the different delayed clock pulses which are marked D1—D4 are delayed by 20 ns with respect to the basic clock D0. If the latch 50 operates in response to the horizontal sync pulse occurring as indicated at 1 in lines HS of Figure 3, the status of the latch 50 will be assigned to the logic (1, 0, 0, 0, 1) corresponding to the presence of the delayed pulses. The signal being converted by the RAM 52 representing the delayed pulse D1 in accordance with the Table 1 is supplied to the selector 54. Thus, the delayed pulse D1 is used as the synchronising clock pulse instead of the basic pulse D0. On occurrence of the next horizontal sync pulse marked 2 in line HS of Figure 3, the status of the latch 50 will be assigned the logic (0, 0, 1, 1, 0). The signal being converted by the RAM 52 representing the delayed pulse D4 in accordance with the Table 1 is supplied to the selector 54. Then, the delayed pulse D4 is used as the synchronising clock pulse, which in turn is replaced by the delayed pulse D1.

In this manner, the synchronising clock pulse for the entire system is selected in a proper phase relationship out of a plurality of delayed clock pulses coincident with occurrence of the horizontal sync pulse coming from the A/D interface circuit 26.

All the information representative of the delayed pulses established by the predetermined formula corresponding to $2^n$ (n=an integer more than two) status of the latch 50 is stored in the RAM 52.

Generally, any number n of delayed clock pulses, as required, should be obtainable by those skilled in the art.

**Claims**

1. A diagnostic x-ray apparatus for producing visible difference images from x-ray images obtained from x-ray radiation comprising: an x-ray generating source (10, 16, 22) for emitting x-ray radiation to produce an x-ray image; a television camera (18) for converting the x-ray image into a series of television images comprising trains of analogue video signals; an analogue-to-digital converter (26) for converting the analogue video signals into corresponding digital video signals; a digital memory system (28) including at least two digital memory means (30, 32, 34) for storing and integrating the digital video signals in a predetermined sequence; subtracting means (34) for producing digitial difference video signals by performing a subtraction between the recent digital video signals stored in the digital memory system and preceding digital video signals stored in the digital memory system; a digital-to-analogue converter (38) for converting digital difference video signals into analogue difference video signals; synchronising means (36) for producing synchronising signals for controlling the operation of the analogue-to-digital converter (26), the digital-to-analogue converter (38), the storing and integrating of the digital memory system (28), and the operation of said subtracting means (34); and a display or recording means (40) for displaying or recording visible difference images corresponding to the analogue difference video signals, characterised in that the synchronising means (36) includes means (40—48) for generating a plurality of pulse trains in predetermined time relationship and means (50—54) for selecting one of the pulse trains according to a predetermined formula in response to synchronising pulse data in said video signals, said one pulse train being selected in a way to minimise synchronisation errors between the synchronising pulse data in the video signals and the synchronising signals from the synchronising means, and means responsive to said selected pulse train for producing the said synchronising signals.

2. The apparatus of claim 1 wherein the means for generating a plurality of pulse trains has a local oscillator (42) for generating basic clock pulses at a predetermined rate; and delay line means (48) comprising delay elements coupled to the local oscillator to delay basic clock pulses by a predetermined amount to produce the pulse trains in predetermined time relationship.

3. The apparatus of claim 2 wherein said analogue-to-digital converter means (26) includes: a stripper for separating vertical and horizontal synchronising signals from analogue video signals of the television camera (18).

4. The apparatus of claim 3 where the means (50—54) for selecting one pulse train out of the plurality of pulse trains produces synchronising signals corresponding to the horizontal synchronising signals from the stripper; and the means (50—54) for selecting includes latch means (50) connected to the delay line means for generating logic signals representing the status of synchronism of the latch means with the horizontal synchronising signals, and means for generating signals representing a pulse train selected responsive to said logic signals.

**Patentansprüche**

1. Röntgendiagnostikeinrichtung zur Erzeugung sichtbarer Differenzbilder aus durch Röntgenbestrahlung erhaltenen Röntgenbildern, mit einer Röntgenstrahlquelle (10, 16, 22) zur Abgabe von Röntgenstrahlung, um ein Röntgenbild zu erzeugen, einer Fernsehkamera (18) zur Umwandlung des Röntgenbildes in eine Reihe von Fernsehbildern aus analogen Videosignalzügen, einem Analog/·

Digitalkonverter (26) zum Umwandeln der analogen Videosignale in entsprechende digitale Videosignale, einem digitalen Speichersystem (28), das wenigstens zwei digitale Speichereinrichtungen (30, 32, 34) zum Speichern und Integrieren der digitalen Videosignale in einer vorbestimmten Reihenfolge aufweist, einer Subtrahiereinrichtung (34) zur Erzeugung digitaler Differenzvideosignale durch Durchführung einer Subtraktion zwischen den im digitalen Speichersystem gespeicherten jüngeren digitalen Videosignalen und den im digitalen Speichersystem gespeicherten vorhergehenden digitalen Videosignalen, einem Digital/Analogkonverter (38) zum Umwandeln der digitalen Differenzvideosignale in analoge Differenz-videosignale, Sychronisiermitteln (36) zur Erzeugung von Synchronisationssignalen zur Steuerung der Arbeitsweise des Analog/Digitalkonverters (26), des Digrital/Analogkonverters (38), der Speicher- und Integrationsvorgänge des digitalen Speichersystems (28) und der Arbeitsweise der Subtraktionseinrichtung (34), und mit Wiedergabe- und Aufzeichnungsmitteln (40) zum Wiedergeben oder Aufzeichnen sichtbarer Differenzbilder entsprechend den analogen Differenzvideosignalen, dadurch gekennzeichnet, daß die Synchronisationsmittel (36) Mittel (40—48) zur Erzeugung einer Vielzahl von Impulsreihen in vorbestimmter Zeitbeziehung und Mittel (50—54) zum Auswählen einer der Impulsreihen entsprechend einer vorbestimmten Formel in Abhängigkeit von den Synchronisationsimpulsdaten in den Videosignalen aufweisen, wobei die Impulsreihe derart ausgewählt wird, daß Synchronisationsfehler zwischen den Sycnronisationsimpulsdaten in den Videosignalen und den Synchronisationssignalen der Synchronisationsmittel minimiert werden, sowie Mittel zur Erzeugung der Synchronisationssignale in Abhängigkeit von der ausgewählten Impulsreihe.

2. Einrichtung nach Anspruch 1, dadurch gekennzeichnet, daß die Mittel zur Erzeugung einer Vielzahl von Impulsreihen einen Empfangsoszillator (42) zur Erzeugung von Basistaktimpulsen mit vorbestimmter Frequenz aufweisen sowie ein Verzögerungsglied (48), das mit dem Empfangsoszillator verbundene Verzögerungselemente aufweist zur Verzögerung der Basistaktimpuls um ein vorbestimmtes Maß, um die Impulsreihen im vorbestimmten Zeitverhältnis zu erzeugen.

3. Einrichtung nach Anspruch 2, dadurch gekennzeichnet, daß der Analog/Digitalkonverter (26) einen Stripper zum Abtrennen vertikaler und horizontaler Synchronisationssignals von den analogen Videosignalen der Fernsehkamera (18) aufweist.

4. Einrichtung nach Anspruch 3, dadurch gekennzeichnet, daß die Mittel (50—54) zur Auswahl einer Impulsreihe aus der Vielzahl von Impulsreihen den horizontalen Synchronisationssignalen des Strippers entsprechende Synchronisationssignale erzeugen, und daß die Mittel (50—54) mit dem Verzögerungsglied verbundene Verriegelungsmittel (50) aufweisen zur Erzeugung logischer, den Synchronisationszustand der Verriegelungsmittel mit den horizontalen Synchronisationssignalen darstellende Signale, sowie Mittel zur Erzeugung von Signalen, die eine in Abhängigkeit von den logischen Signalen ausgewählte Impulsereihe darstellen.

## Revendications

1. Appareil de diagnostic radiologique pour produire des images de différence ''ou différentielles'' visibles à partir d'images obtenues avec des rayons X qui comprend une source (10, 16, 22) émettant des rayons X afin de produire une image radiologique; une caméra de télévision (18) pour convertir cette image en une série d'images de télévision comprenant des trains de signaux vidéo analogiques; un convertisseur analogique/numérique (28) pour convertir les signaux vidéo analogiques en signaux vidéo numérique correspondants; un système de mémoire (28) incluant, au moins, deux mémoires numériques (30, 32, 34) pour conserver et intégrer les signaux vidéo numériques dans un ordre prédéterminé; des moyens de sonstraction (34) pour produire des signaux vidéo différentiels numériques en effectuant une soustraction entre des signaux vidéo numériques récents conservés dans le système de mémoire numérique, et des signaux vidéo numériques précédents conservés dans le système de mémoire numérique; un convertisseur numérique/analogique (38) pour convertir les signaux différentiels numériques en signaux vidéo différentiels analogiques; des moyens de synchronisation (38) pour produire des signaux de synchronisation pour commander le fonctionnement du convertisseur analogique/numérique (26), du convertisseur numérique/analogique (38), de la mémorisation et de l'intégration du système de mémoire numérique (28) et le fonctionnement desdits moyens de soustraction (34); et des moyens d'enregistrement ou d'affichage (40) pour présenter ou enregistrer les images de différence ou différentielles visibles correspondant aux signaux vidéo de différence analogiques, caractérisé en ce que les moyens de synchronisation (36) incluent des moyens (40—48) pour générer plusieurs trains d'impulsions dans une relation chronologique prédéterminée, et des moyens (50—54) pour sélectionner l'un desdits trains d'impulsions conformément à une formule prédéterminée en réponse à des données de synchronisation d'impulsions présentes dans lesdits signaux vidéo, ledit train d'impulsion étant choisi de manière à minimiser les erreurs de synchronisation entre les données de synchronisation des signaux vidéo et les signaux de synchronisation provenant des moyens de synchronisation, et des moyens qui, en réponse audit train d'impulsions sélectionné, produisant lesdits signaux de synchronisation.

2. Appareil selon la revendication 1, caractérisé en ce que les moyens pour générer les trains d'impulsions comprennent un oscillateur local (42) qui engendre des impulsions d'horloge de base à une cadence prédéterminée; et une ligne à retard (48) comportant des éléments de temporisation couplés à cet

6

oscillateur local afin de retarder les impulsions d'horloge de base dans une mesure prédéterminée afin de produire les trains d'impulsions dans un rapport chronologique prédéterminé.

3. Appareil selon la revendication 2, caractérisé en ce que ledit convertisseur analogique/numérique (26) comprend un séparateur pour séparer les signaux de synchronisation horizontale et verticale des signaux vidéo analogiques de la caméra de télévision (18).

4. Appareil selon la revendication 3, caractérisé en ce que les moyens (50—54) pour sélectionner l'un des trains d'impulsions parmi les multiples trains d'impulsions, produisent des signaux de synchronisation correspondant aux siganux de synchronisation horizontale du séparateur; en ce que les moyens de sélection (50—54) comportant un verrou (50) connecté à la ligne à retard pour produire des signaux logiques représentant l'état de synchronisme dudit verrou avec les signaux de synchronisation, et des moyens pour engendrer des signaux représentant le train d'impulsions sélectionné en réponse auxdits signaux logiques.

FIG. 1.

Fig. 2.

FIG.3.